# EUROPEAN PATENT SPECIFICATION

(11) **EP 2 936 934 B1**
(45) Date of publication and mention of the grant of the patent: **16.05.2018**
(21) Application number: 13830146.0
(22) Date of filing: 20.12.2013
(51) Int. Cl.: H02M 1/00, H05B 33/08, H02M 3/335

(54) **PRIMARY SIDE CONTROLLED CONSTANT CURRENT CONVERTER FOR LIGHTING MEANS**
PRIMÄRSEITIG GESTEUERTER KONSTANTSTROMWANDLER FÜR LEUCHTMITTEL
CONVERTISSEUR DE COURANT CONSTANT COMMANDÉ DE PRIMAIRE POUR MOYENS D'ÉCLAIRAGE

(30) Priority: 21.12.2012 DE 102012224212
(43) Date of publication of application: 28.10.2015
(73) Proprietor: Tridonic GmbH & Co. KG, 6851 Dornbirn (AT)
(72) Inventor: MARENT, Günter, A-6780 Bartholomäberg (AT); MITTERBACHER, Andre, A-6850 Dornbirn (AT)
(74) Representative: Rupp, Christian
(86) International application number: PCT/AT2013/000209
(87) International publication number: WO 2014/094014

(56) References cited:
- EP-A1- 1 791 399
- WO-A2-2010/106375
- DE-A1-102006 016 983
- DE-A1-102010 031 244
- DE-A1-102012 007 478
- US-B1- 6 683 422

## Description

The invention relates to an LED converter and a method for operating such a converter.

LED converter using resonant converters, such as e.g. LLC converters, are known in the art and for example are widely used for cost-efficient LED converter. In particular, a LED converter can be supplied by an electric supply source, which may deliver a DC or an AC current to the LED converter. In case of an AC current being supplied, the LED converter may comprise a rectifier to produce an alternating DC current from the input AC current.

The alternating DC current is then fed, for example, to a power factor correction circuit, which then supplies a resonant converter, e.g. a series resonant converter, in particular a LLC converter. A transformer connected to or being part of the resonant converter then transfers power over a galvanic barrier, e.g. a SELV barrier (separated or safety extra low voltage barrier), from a primary side of the galvanic barrier to a secondary side of the galvanic barrier to supply a current I_{LED} to a light source, in particular an LED string comprising at least one LED.

In most of the known applications, LLC converters serve as a constant voltage converters, which supply a secondary side DC bus. There a current source, typically a buck converter, generates the constant current that is required to drive high power LEDs.

A LLC converter is a resonant half-bridge converter that uses two inductors (LL) and a capacitor (C), known as an LLC configuration, and is known as such to those skilled in the art.

The general advantage of using an LLC converter is that it provides a soft switching capability (primary switches as well as secondary side diodes) and a good load rejection ratio, i.e. the output voltage does not vary much if the secondary load changes.

Patent document WO2010/106375A2 discloses an LED converter for providing power to an LED string. The LED converter is an LLC converter comprising a control circuit, a clocked half-bridge, an LC-circuit and a transformer. The control unit controls the switches of the half-bridge and senses two electric parameters on the primary side of the transformer, namely a first electric parameter indicative of the current supplied to the LED string and a second electric parameter indicative of a dimming value provided to the LED converter.

Patent documents DE102012007478A1, DE102010031244A1, EP1791399A1 and US6,683,422B1 disclose further LED converters, each being based upon an LLC converter and comprising a control circuit, a clocked half-bridge, an LC-circuit and a transformer. In order to reduce the costs and to improve the efficiency of LED converters, especially when using LLC converters, it would be beneficial if the secondary side current source would not be required. It would be especially desirable to operate the LLC converter as a constant current converter instead of a constant voltage converter. However, a LLC constant current converter requires a control loop to control its output current, e.g. the LED current I_{LED}.

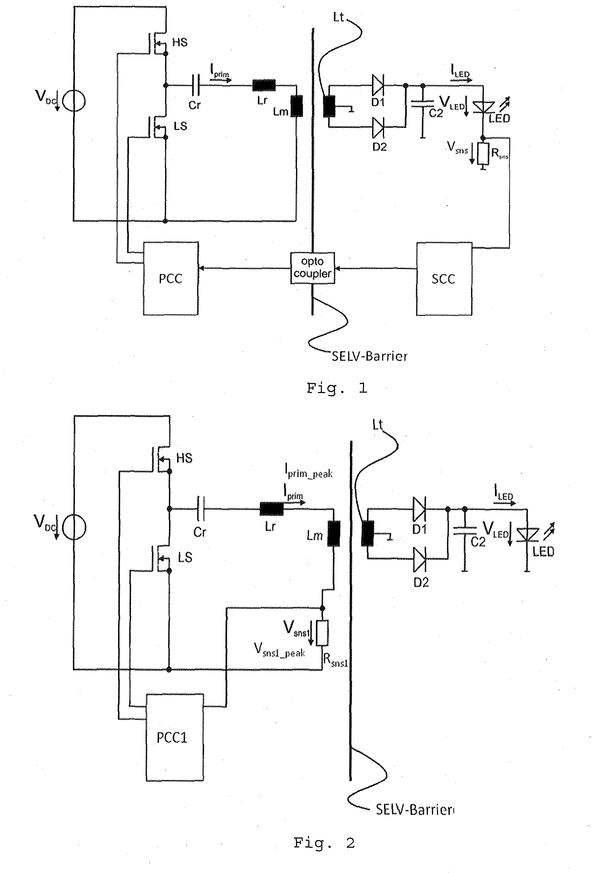

For example, Fig. 1 shows an exemplary circuit, which allows to measure an LED current on the secondary side of a SELV barrier, i.e. the secondary side of a galvanic barrier, and to provide a feedback to the primary side of the galvanic barrier.

In particular, Fig. 1 shows a switching regulator, e.g. a half bridge converter, supplied from a DC voltage V_{DC} with a high switch HS and a low switch LS connected in a half bridge. The switches of the half bridge can be transistors, e.g. FETs or MOSFETs.

From a midpoint between the half bridge switches HS, LS an LLC circuit is connected with capacity Cr followed by an inductivity Lr (forming a resonant LC circuit) and the primary side inductivity Lm of the transformer.

On the secondary side, the secondary side inductivity Lt of the transformer is shown connected to diodes D1 and D2 providing a DC LED current I_{LED} to the lighting means, in this case the LED. The LED current I_{LED} is shunt to ground via shunt resistor Rₛₙₛ.

A secondary side control circuit SCC senses/measures a voltage Vₛₙₛ at the shunt resistor Rₛₙₛ and feeds back the voltage Vₛₙₛ or a parameter indicative of the measured voltage to a primary side control circuit PCC via an optocoupler. The primary side control circuit PCC then sets the frequency for activating the switches HS, LS. The voltage Vₛₙₛ is an electric parameter also indicative and correlated to the LED current I_{LED} and hence from the voltage Vₛₙₛ the LED current I_{LED} or another correlated electric parameter can be derived. Based on the feedback, the primary side control circuit PCC adjusts the frequency of the half bridge switches of the resonant converter.

As can be seen from Fig. 1, the closed loop control requires provision of the secondary side control circuit SCC and also a feedback path for the electric parameter crossing the galvanic barrier (SELV barrier) to allow the control of the LED current I_{LED} by the primary side control circuit PCC. While the required measurement of the electric parameter is performed on the secondary side, it is also possible to use a primary side sensing to obtain an electric parameter required for controlling the LED current I_{LED}.

As shown in the exemplary circuit of Fig. 2, a current Iₚᵣᵢₘ of the resonant converter can be measured on the primary side of the galvanic barrier to set an operating frequency of the resonant converter half bridge.

Fig. 2 shows that on the secondary side of the galvanic barrier no shunt resistor is provided, and also neither a measurement is performed on the secondary side nor is a secondary side control circuit SCC present.

While the primary side of the resonant converter is in principle set up as described for Fig. 1, a shunt resistor Rₛₙₛ₁ is connected in series with the primary side inductivity Lm of the transformer. A primary side control circuit PCC1 measures/senses an electric parameter, e.g., the shunt voltage Vₛₙₛ₁, which is indicative of the resonant converter Iₚᵣᵢₘ. The primary side control circuit PCC1 sets the switching frequency of switches HS, LS of the resonant converter half bridge based on the measured electric parameter, which correlates to the resonant converter current Iₚᵣᵢₘ.

This setup allows creating a control loop only on the primary side of the galvanic barrier and, for example, no feedback is required over the galvanic barrier (SELV barrier), which improves circuit safety.

The primary side control circuit PCC1 measures the voltage Vₛₙₛ₁ at the primary side winding, represented by the primary side inductivity Lₘ, of the transformer and, in particular, if the relation between the resonant converter current Iₚᵣᵢₘ and the LED current I_{LED} is known, the LED current I_{LED} can be controlled by adjusting the switching frequency of the high switch HS and the low switch LS based on the measured shunt voltage Vₛₙₛ₁.

This primary side sensing, in view of the secondary side sensing, improves the costs of the LED converter as no secondary side control circuit is required and also no crossing of the galvanic barrier is needed, which saves the costs for additional components, for example optocouplers. Further, if dimming commands should be executed, either through dimming signals signaled over the mains supply, an analog interface or a digital interface (e.g. DALI), the primary side sensing is beneficial as the dimming commands are typically received on the primary side of the LED converter.

It is common to control the resonant converter current Iₚᵣᵢₘ by using a peak control principle. According to this principle, the frequency of the half bridge switches HS, LS is adjusted in a way to hold the peak voltage value V_{sns_peak} (indicative of a peak resonant converter current I_{prim_peak}) sensed at the primary side winding (primary side inductivity Lm of the tranformer) of the transformer on a constant level.

This control principle, however, has a drawback as the shape of the primary resonant converter current Iₚᵣᵢₘ changes with the switching frequency of the half bridge and LED voltage V_{LED}. As a result, these factors lead to a changing relation between peak resonant converter current I_{prim_peak} and the LED current I_{LED}.

To compensate for these changing relations, additional measurements need to be performed in the circuit to obtain additional signals, which severely complicates the design and operation of the converter. This is disadvantageous additional wiring again increases the converter costs.

Another disadvantage of the peak control principle is that oscillations caused by component parasitics or interferences from other parts of the converter can cause a distorted peak value. This may lead to incorrect measurements and consequently to an imperfect control of LED current I_{LED}.

The invention hence provides a solution to overcome the shortcomings of the known approaches by providing an LED converter, which does not require additional measurements but also no secondary side measurements as shown in the prior art. Further, the invention provides a method for operating an LED converter, an operating device comprising the LED converter as well as a lamp comprising the inventive LED converter. While the main aspects of the invention are claimed in the independent claims, further embodiments of the invention are subject to the dependent claims. The invention relates to an LED converter for providing power to an LED string according to independent claim 1. According to an embodiment of the invention, a square mean root value, an averaged full-wave rectified value, or an averaged half-wave rectified value is supplied to the control circuit of the LED converter. The invention relates also to a method for providing power to a LED string according to independent claim 3. In the following, the invention is also described in view of the figures. In particular,
- Fig. 1: shows an LLC converter using secondary side sensing;
- Fig. 2: shows also an LLC converter according to the prior art with primary sensing using a peak current control principle;
- Fig. 3: shows an exemplary circuit according to the invention;
- Fig. 4: shows a relation between different circuit parameters.

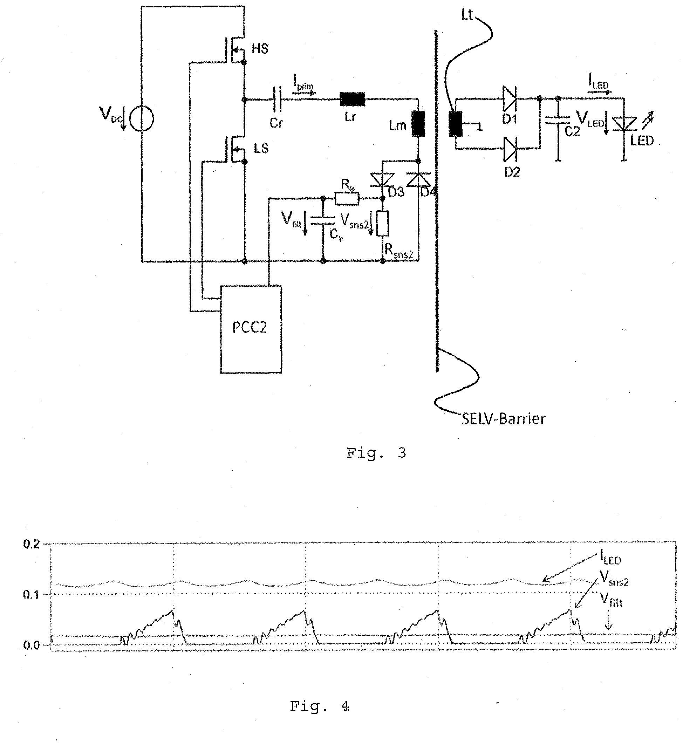

In the following, the invention is mainly described referring to Fig. 3, describing the differences to the prior art approaches described in respect to Figs. 1 and 2.

In particular, the secondary side of the resonant converter shown in Fig. 3 corresponds to the secondary side of the galvanic barrier shown in Fig. 2, and hence to the secondary side of Fig. 1 without shunt resistor Rₛₙₛ. Also, like components in the figures shown are referred to by the same reference signs.

On the primary side of the circuit shown in Fig. 3, being also largely set up as shown in Fig. 1, in series with the primary side inductivity Lₘ of the transformer a diode D3 is connected in forward direction followed by a shunt resistor Rₛₙₛ₃. In parallel to the shunt resistor Rₛₙₛ₃ and the diode D3, a diode D4 is connected to the primary side inductivity Lm in reverse direction. A midpoint between the diode D3 and the shunt resistor Rₛₙₛ₃ is connected to a filter capacity Cₗₚ, running in parallel to the shunt resistor Rₛₙₛ₃, by a filter resistor Rₗₚ.

A primary side control circuit PCC2 now senses an output voltage V_{filt} of the low pass filter, which is indicative of the average resonant converter current Iₚᵣᵢₘ. The primary side control circuit PCC2 then controls the half bridge switches LS, HS according to the sensed output voltage V_{filt}.

The primary side inductivity Lm and the secondary side inductivity Lt in particular represent a primary and the secondary transformer windings.

The supply of the light source on the secondary side particularly is a direct supply, i.e. no further converter and in particular not buck converter is used for the supply of the LED string. The resonant converter can also be operated as a constant current source.

The primary side control relies on a high correlation between sensed primary side electric parameter (e.g. Iₚᵣᵢₘ) of the resonant converter and the LED current I_{LED}, and also in this regard application of the primary peak control principle is not sufficiently accurate and another approach is necessary.

The reason for this is that in primary peak control the sensed electric parameter on the primary side and the LED current I_{LED} are not in correlation The electric parameter I_{prim_peak} sensed/measured according to the primary peak control principle only uses one point in time of the parameter sensed on the primary side (i.e. the maximum voltage). Consequently, form factor changes cannot be sensed which leads to unacceptable variations.

The invention hence allows to closely relate the electric parameter sensed on the primary side to the LED current/voltage I_{LED}/V_{LED} by using an integral measurement of the primary side signal, e.g. the (AC) signal/current output by the half bridge.

Examples for integral measurements are: a root means square (RMS) measurements of converter current Iₚᵣᵢₘ as Iₚᵣᵢₘ^{RMS} , an average full-wave rectified value of converter current Iₚᵣᵢₘ as Iₚᵣᵢₘ^{arv} and/or an average off-wave rectified value of converter current Iₚᵣᵢₘ as Iₚᵣᵢₘ^{1RV}.

The exemplary circuit shown in Fig. 3 allows measuring an integral measurement. The primary side of the resonant converter comprises a capacity Cr and inductivity Lr, connected to the primary winding of Lm of the transformer. The resonant converter current Iₚᵣᵢₘ is rectified by diodes D3, D4 and sensed at shunt resistor Rₛₙₛ₂.

The resonant converter current Iₚᵣᵢₘ (or an electric parameter correlated to the resonant converter current Iₚᵣᵢₘ, e.g. shunt voltage Vₛₙₛ₂) is then low pass filtered by the low pass filter established by filter resistor Rₗₚ and filter capacity Cₗₚ, to produce the primary side sensed electric parameter, the output voltage V_{filt}, which is indicative of the averaged half-wave rectified resonant converter current Iₚᵣᵢₘ^{1RV}.

This measurement of output voltage V_{filt} offers a better correlation to the LED current I_{LED}. Also interferences and oscillations are removed by the low pass filtering. While the circuit shows how an averaged half-wave rectified value can be determined (output voltage V_{filt}), the circuit can also be adapted to produce a RMS value or average full-wave rectified value for sensing/measurement by the primary side control circuit PCC2.

The value V_{filt} is used as an electric parameter by primary controller circuit PCC2. The primary controller circuit PCC2 can be a digital or an analog controller, e.g. an IC, ASIC, or a microcontroller. In case of the primary controller circuit PCC2 being a digital controller, the controller may comprise an analog-digital converter. The converter then adjusts the frequency of the half bridge and in particular the switching frequency of the switches HS, LS.

Relations between relevant parameters of the circuit of Fig. 3 are shown in Fig. 4.

Here, the voltage value Vₛₘₛ₂ is shown as an unsteady curve, while the low pass filtered voltage V_{filt} is shown with an almost constant level. The top curve represents the LED current I_{LED}, which is not as constant as the voltage V_{filt}. However, the correlation between the voltage V_{filt} and the LED current I_{LED} is highly improved.

In summary, the invention hence provides an LED converter comprising an LLC converter for driving an LED string comprising at least one LED, wherein the LED current through the LED string is controlled by measuring an integral parameter of the LLC converter on its primary side, in particular, the LLC current Iₚᵣᵢₘ. An averaged rectified, averaged one-way rectified or mean root square value of this parameter is produced through the circuit.

The invention also provides a beneficial solution for LED converters in which an SELV barrier deems to be maintained for security reasons, as no feedback is required to the primary side from the secondary side of the LLC converter.

A primary side winding of the transformer may also be formed from the primary side inductivity Lm and the inductivity Lr.

Optionally a slow feedback signal from the secondary side may be included to cancel out parasitic influences. The update rate of this feedback loop can be very slow, which relaxes significantly the requirements for the feedback path over the SELV barrier.

## Claims

1. LED converter for providing power to a LED string (LED) comprising at least one LED, comprising:
- a resonant converter with a switching regulator, wherein the resonant converter is an LLC converter and the switching regulator is a clocked half-bride converter,
- a galvanic barrier, the primary side of which being supplied by the switching regulator and the secondary side of which being arranged for providing directly or indirectly power to the LED string (LED), wherein the galvanic barrier is a transformer, and
- a control circuit (PCC2) on the primary side of the galvanic barrier and which is adapted to sense an averaged value of an primary side electric parameter indicative of a current supplied to the LED string (LED) on the secondary side of the galvanic barrier and wherein the control circuit (PCC2) is adapted to control a switching frequency of switches (HS, LS) of the clocked half-bridge converter, based on the sensed averaged value of the primary side electric parameter to control the current (I_{LED}) supplied to the LED string (LED),
wherein the LLC converter comprises an LC circuit, to which a primary side inductivity (Lm) of the transformer and a shunt resistor (Rₛₙₛ₂) of the LED converter is connected in series,
the LED converter being **characterized in that** in series with the primary side inductivity (Lm) of the transformer a first diode (D3) is connected in forward direction followed by the shunt resistor (Rₛₙₛ₂) and wherein, in parallel to the shunt resistor (Rₛₙₛ₂) and the first diode (D3), a second diode (D4) is connected to the primary side inductivity (Lm) in reverse direction to the first diode (D3), wherein the primary side electric parameter is sensed on a midpoint between the first diode (D3) and the shunt resistor (Rₛₙₛ₂), wherein a low pass-filter is provided to filter the sensed primary side electric parameter before it is supplied to the control circuit (PCC2), and is configured to thereby produce the averaged value of the primary side electric parameter, and wherein the control circuit (PCC2) is configured to only sense the averaged value of the primary side electric parameter produced by the low pass-filter.

2. LED converter according to claim 1, wherein a square mean root value, an averaged full-wave rectified value, or an averaged half-wave rectified value is supplied to the control circuit (PCC2).

3. A method for providing power to a LED string (LED) with at least one LED via a LED converter, said method comprising the steps of:
- supplying, by a switching regulator, wherein the switching regulator is a clocked half-bridge converter of a resonant converter of the LED converter, a primary side of a galvanic barrier, wherein the galvanic barrier is a transformer of the LED converter, and providing directly or indirectly power to the LED string (LED) by a secondary side of the galvanic barrier,
- sensing an averaged value of a primary side electric parameter indicative of a current supplied to the LED string (LED) on the secondary side of the galvanic barrier, wherein the sensing is executed by a control circuit of the LED converter, said control circuit being arranged on the primary side of the galvanic barrier,
- controlling, by the control circuit, a switching frequency of switches (HS, LS) of the clocked half-bridge converter, based on the sensed averaged value of the primary side electric parameter,
wherein the resonant converter is an LLC converter comprising an LC circuit, to which a primary side inductivity (Lm) of a transformer and a shunt resistor (Rₛₙₛ₂) of the LED converter is connected in series,
said method being **characterized in that**
- in series with the primary side inductivity (Lm) of the transformer a first diode (D3) is connected in forward direction followed by the shunt resistor (Rₛₙₛ₂) and, in parallel to the shunt resistor (Rₛₙₛ₂) and the first diode (D3), a second diode (D4) is connected to the primary side inductivity (Lm) in reverse direction to the first diode (D3), and
- the primary side electric parameter is sensed on a midpoint between the first diode (D3) and the shunt resistor (Rₛₙₛ₂),
wherein a low pass-filter is provided for filtering the sensed primary side electric parameter before it is supplied to the control circuit (PCC2), and configured to produce the averaged value of the primary side electric parameter, and wherein the control circuit (PCC2) only senses the averaged primary side electric parameter produced by the low pass-filter.

## Patentansprüche

1. LED-Wandler zum Bereitstellen von Energie für eine LED-Girlande (LED), die mindestens eine LED umfasst, umfassend:
- einen Resonanzwandler mit einem Sperrwandler, wobei der Resonanzwandler ein LLC-Wandler ist und der Sperrwandler ein getakteter Halbbrückenwandler ist,
- eine galvanische Sperre, deren Primärseite durch den Sperrwandler gespeist wird und deren Sekundärseite zum direkten oder indirekten Bereitstellen von Energie für die LED-Girlande (LED) angeordnet ist, wobei die galvanische Sperre ein Transformator ist, und
- einen Steuerschaltkreis (PCC2) auf der Primärseite der galvanischen Sperre, der dafür eingerichtet ist, einen Durchschnittswert eines primärseitigen elektrischen Parameters abzufühlen, der einen Strom angibt, der auf der Sekundärseite der galvanischen Sperre in die LED-Girlande (LED) gespeist wird, und wobei der Steuerschaltkreis (PCC2) dafür eingerichtet ist, eine Schaltfrequenz von Schaltern (HS, LS) des getakteten Halbbrückenwandlers auf der Grundlage des abgefühlten Durchschnittswerts des primärseitigen elektrischen Parameters zu steuern, um den Strom (I_{LED}) zu steuern, der in die LED-Girlande (LED) gespeist wird,
wobei der LLC-Wandler Folgendes umfasst:
einen LC-Schaltkreis, mit dem eine primärseitige Induktivität (Lm) des Transformators und ein Nebenschlusswiderstand (Rₛₙₛ₂) des LED-Wandlers in Reihe geschaltet sind,
wobei der LED-Wandler **dadurch gekennzeichnet ist, dass** mit der primärseitigen Induktivität (Lm) des Transformators eine erste Diode (D3) in Vorwärtsrichtung in Reihe geschaltet ist, gefolgt von dem Nebenschlusswiderstand (Rₛₙₛ₂),
und wobei parallel zu dem Nebenschlusswiderstand (Rₛₙₛ₂) und der ersten Diode(D3) eine zweite Diode (D4) mit der primärseitigen Induktivität (Lm) in Umkehrrichtung zu der ersten Diode (D3) geschaltet ist, wobei der primärseitige elektrische Parameter an einem Mittelpunkt zwischen der ersten Diode (D3) und dem Nebenschlusswiderstand (Rₛₙₛ₂) abgefühlt wird, wobei ein Tiefpassfilter bereitgestellt ist, um den abgefühlten primärseitigen elektrischen Parameter zu filtern, bevor er in den Steuerschaltkreis (PCC2) gespeist wird, und dafür konfiguriert ist, dadurch den Durchschnittswert des primärseitigen elektrischen Parameters zu erzeugen,
und wobei der Steuerschaltkreis (PCC2) dafür konfiguriert ist, nur den Durchschnittswert eines primärseitigen elektrischen Parameters abzufühlen, der von dem Tiefpassfilter erzeugt wird.

2. LED-Wandler nach Anspruch 1, wobei ein quadratischer Mittelwert, ein Zweiweg-Gleichrichtwert oder ein Einweg-Gleichrichtwert in den Steuerschaltkreis (PCC2) gespeist wird.

3. Verfahren zum Bereitstellen von Energie für eine LED-Girlande (LED) mit mindestens einer LED über einen LED-Wandler, wobei das Verfahren die folgenden Schritte umfasst:
- Speisen einer Primärseite einer galvanischen Sperre durch einen Sperrwandler, wobei der Sperrwandler ein getakteter Halbbrückenwandler eines Resonanzwandlers des LED-Wandlers ist, wobei die galvanische Sperre ein Transformator des LED-Wandlers ist, und direktes oder indirektes Bereitstellen von Energie für die LED-Girlande (LED) durch eine Sekundärseite der galvanischen Sperre,
- Abfühlen eines Durchschnittswertes eines primärseitigen elektrischen Parameters, der einen Strom angibt, der in die LED-Girlande (LED) auf der Sekundärseite der galvanischen Sperre gespeist wird, wobei das Abfühlen durch einen Steuerschaltkreis des LED-Wandlers ausgeführt wird, wobei der Steuerschaltkreis auf der Primärseite der galvanischen Sperre angeordnet ist,
- Steuern einer Schaltfrequenz von Schaltern (HS, LS) des getakteten Halbbrückenwandlers durch den Steuerschaltkreis auf der Grundlage des abgefühlten Durchschnittswertes des primärseitigen elektrischen Parameters,
wobei der Resonanzwandler ein LLC-Wandler ist, der einen LC-Schaltkreis umfasst, mit dem eine primärseitige Induktivität (Lm) eines Transformators und ein Nebenschlusswiderstand (Rₛₙₛ₂) des LED-Wandlers in Reihe geschaltet sind,
wobei das Verfahren **dadurch gekennzeichnet ist, dass**:
mit der primärseitigen Induktivität (Lm) des Transformators eine erste Diode (D3) in Vorwärtsrichtung in Reihe geschaltet ist, gefolgt von dem Nebenschlusswiderstand (Rₛₙₛ₂), und parallel zu dem Nebenschlusswiderstand (Rₛₙₛ₂) und der ersten Diode(D3) eine zweite Diode (D4) mit der primärseitigen Induktivität (Lm) in Umkehrrichtung zu der ersten Diode (D3) geschaltet ist, und
der primärseitige elektrische Parameter an einem Mittelpunkt zwischen der ersten Diode (D3) und dem Nebenschlusswiderstand (Rₛₙₛ₂) abgefühlt wird, wobei ein Tiefpassfilter bereitgestellt ist, um den abgefühlten primärseitigen elektrischen Parameter zu filtern, bevor er in den Steuerschaltkreis (PCC2) gespeist wird, und dafür konfiguriert ist, den Durchschnittswert des primärseitigen elektrischen Parameters zu erzeugen,
und wobei der Steuerschaltkreis (PCC2) nur den Durchschnittswert des primärseitigen elektrischen Parameters abfühlt, der von dem Tiefpassfilter erzeugt wird.

## Revendications

1. Convertisseur à LED pour la fourniture de l'énergie à une chaîne de LED (LED) comprenant au moins une LED, comprenant :
- un convertisseur résonant avec un régulateur à commutation, le convertisseur résonant étant un convertisseur LLC et le régulateur à commutation étant un convertisseur à demi-pont cadencé,
- une barrière galvanique, dont le côté primaire est alimenté par le régulateur à commutation et le régulateur secondaire est conçu pour fournir directement ou indirectement de l'énergie à la chaîne de LED (LED), la barrière galvanique étant un transformateur et
- un circuit de commande (PCC2) sur le côté primaire de la barrière galvanique et qui est conçu pour détecter une valeur moyenne d'un paramètre électrique du côté primaire représentatif d'un courant appliqué à la chaîne de LED (LED) sur le côté secondaire de la barrière galvanique et le circuit de commande (PCC2) étant conçu pour contrôler une fréquence de commutation de commutateurs (HS, LS) du convertisseur à demi-pont cadencé, sur la base de la valeur moyenne détectée du paramètre électrique du côté primaire pour contrôler le courant (I_{LED}) appliqué à la chaîne de LED (LED),
le convertisseur LLC comprenant un circuit LC, auquel une inductance de côté primaire (Lm) du transformateur et une résistance de court-circuit (Rₛₙₛ₂) du convertisseur à LED sont connectés en série,
le convertisseur à LED étant **caractérisé en ce que**,
en série avec l'inductance du côté primaire (Lm) du transformateur, est connectée une première diode (D3) dans un sens direct, suivie de la résistance de court-circuit (Rₛₙₛ₂) et en parallèle avec la résistance de court-circuit (Rₛₙₛ₂) et la première diode (D3), une deuxième diode (D4) est connectée à l'inductance de côté primaire (Lm) dans le sens inverse à la première diode (D3),
le paramètre électrique de côté primaire étant détecté au niveau d'un point central entre la première diode (D3) et la résistance de court-circuit (Rₛₙₛ₂),
un filtre passe-bas étant prévu pour filtrer le paramètre électrique de côté primaire détecté avant qu'il ne soit appliqué au circuit de commande (PCC2) et étant conçu pour produire la valeur moyenne du paramètre électrique de côté primaire,
et le circuit de commande (PCC2) étant conçu pour détecter uniquement la valeur moyennée du paramètre électrique de côté primaire produite par le filtre passe-bas.

2. Convertisseur à LED selon la revendication 1, dans lequel une valeur moyenne quadratique, une valeur de pleine onde moyennée rectifiée ou une valeur de demi-onde moyennée rectifiée est appliquée au circuit de commande (PCC2).

3. Procédé de fourniture d'énergie à une chaîne de LED (LED) avec au moins une LED via un convertisseur à LED, ledit procédé comprenant les étapes suivantes :
- alimentation, par un régulateur à commutation, le régulateur à commutation étant un convertisseur à demi-pont cadencé d'un convertisseur résonant du convertisseur à LED, d'un côté primaire d'une barrière galvanique, la barrière galvanique étant un transformateur du convertisseur à LED et alimentation en énergie directement ou indirectement de la chaîne de LED (LED) par un côté secondaire de la barrière galvanique,
- détection d'une valeur moyennée d'un paramètre électrique de côté primaire représentatif d'un courant appliqué à la chaîne de LED (LED) sur le côté secondaire de la barrière galvanique, la détection étant exécutée par un circuit de commande du convertisseur à LED, ledit circuit de commande étant disposé sur le côté primaire de la barrière galvanique,
- contrôle, par le circuit de commande, d'une fréquence de commutation de commutateurs (HS, LS) du convertisseur à demi-pont cadencé, sur la base de la valeur moyennée détectée du paramètre électrique de côté primaire,
le convertisseur résonant étant un convertisseur LLC comprenant un circuit LC, auquel une inductance de côté primaire (Lm) du transformateur et une résistance de court-circuit (Rₛₙₛ₂) du convertisseur à LED sont connectés en série,
ledit procédé étant **caractérisé en ce que**,
- en série avec l'inductance du côté primaire (Lm) du transformateur, est connectée une première diode (D3) dans un sens direct, suivie de la résistance de court-circuit (Rₛₙₛ₂) et, en parallèle avec la résistance de court-circuit (Rₛₙₛ₂) et la première diode (D3), une deuxième diode (D4) est connectée à l'inductance de côté primaire (Lm) dans le sens inverse à la première diode (D3)
et
- le paramètre électrique de côté primaire est détecté au niveau d'un point central entre la première diode (D3) et la résistance de court-circuit (Rₛₙₛ₂),
un filtre passe-bas étant prévu pour filtrer le paramètre électrique de côté primaire détecté avant qu'il ne soit appliqué au circuit de commande (PCC2) et étant conçu pour produire la valeur moyennée du paramètre électrique de côté primaire,
et le circuit de commande (PCC2) détectant uniquement la valeur moyennée du paramètre électrique de côté primaire produite par le filtre passe-bas.
